# EUROPEAN PATENT SPECIFICATION

(11) **EP 2 619 273 B1**
(45) Date of publication and mention of the grant of the patent: **01.07.2015**
(21) Application number: 11761247.3
(22) Date of filing: 20.09.2011
(51) Int. Cl.: C09D 1/08, H01B 3/08, H01B 3/10, H01F 41/12, C08K 5/29

(54) **COATING COMPOSITION FOR METAL CONDUCTORS**
BESCHICHTUNGSZUSAMMENSETZUNGEN FÜR METALLLEITER
COMPOSITION DE REVÊTEMENT POUR CONDUCTEURS MÉTALLIQUES

(30) Priority: 24.09.2010 US 386121 P
(43) Date of publication of application: 31.07.2013
(73) Proprietor: Coatings Foreign IP Co. LLC, Wilmington, DE 19801 (US)
(72) Inventor: BOEHM, Frank-Rainer, 51519 Odenthal (DE); MEINERS, Pascal, 48163 Muenster (DE); HERM, Michael, 42553 Velbert (DE); RICKEN, Stefan, 44795 Bochum (DE)
(74) Representative: Maiwald Patentanwalts GmbH
(86) International application number: PCT/US2011/052323
(87) International publication number: WO 2012/040180

(56) References cited:
- WO-A1-00/54286
- WO-A1-03/057786
- US-A1- 2009 156 712

## Description

### Field of the Invention

The present invention relates to a coating composition which provides highly increased thermal and mechanical resistance of the coatings for the use on electrically conductive wires.

### Background of the Invention

Three-phase a.c. motors, for example frequency converter-controlled motors or high voltage asynchronous machines require the use of wire wrappings which satisfy the stringent requirements in respect of thermal endurance and mechanical properties, mainly the flexural strength of the insulation layer, in order to be able to withstand high voltage loads and pulse-shaped voltage loads without damage. Furthermore, especially thermal resistance is of high importance as such motors have high temperatures of operation. A further requirement in respect of wire wrappings of electrical equipment is the partial discharge resistance of the wire coatings.

According to WO 96/41 909, a coating composition is disclosed which comprises a binder and a particulate material, wherein the particulate material may be metal oxides, for example, titanium dioxide, zirconium oxide, zinc oxide, iron oxide or alumina. The particulate material has no chemical reactivity whatsoever. During the manufacture of such coated wires, preliminary extension may occur which leads to destruction of the coating layers, Similar compositions with comparable properties are described in DE-A 198 32 186.

According to DE-A 196 50 288, at least one of the electrically insulating coating layers contains an organically modified silica (hetero)polycondensate prepared by hydrolytic condensation of compounds of silicon and optionally of boron, aluminium, phosphorus, tin, lead, the transition metals, lanthanides and actinides, the monomer units being composed essentially of inorganic and organic components which are subsequently crosslinked. The coatings obtained have no sufficient flexibilities.

In DE-A 198 11 333, a partial discharge-resistant coating is proposed which, in addition to binders, also contains monomers of element-organic compounds, particularly of silicon, germanium, titanium and zirconium. The organic radicals used are C1 to C20 alkyl radicals or chelating radicals, alkylamine, alkanolamine, acetate, citrate, lactate and/or acetonate radicals. In DE-A 198 41 977, inorganic-organic hybrid polymers are used which leads to a further improvement in partial discharge resistance of the coating layer.

US-A 20030232144 describes a wire coat comprising sols of particles of metal oxides and/or silicon oxide, providing improved partial discharge resistance of the coatings, the particles have an average diameter in a range 100 nm or less and are dispersed in the coating composition.

US 6,908,692 discloses nano-scaled particles chemically linked to the binder network in the wire coating. This approach results in an excellent partial discharge resistance, which is sufficient also for stringent requirements, particularly for three-phase a.c. motors in continuous operation and frequency converter-controlled motors. Furthermore, the wire coating shows excellent partial discharge resistance even after flexural stress of the coating, as it occurs when the wire is wrapped during the manufacturing of the electrical device.

However, thermal and mechanical resistance of the coatings could differ in respect to specific application requirements.

### Summary of the Invention

The invention relates to a coating composition for the use on electrically conductive wires, the coating composition comprising
A) 0.1 to 60 wt.% of one or more reactive particles having an average diameter in a range of 1 to 300 nm, the particles based on an element-oxygen network with one or multiple elements of the series comprising silicon, zinc, aluminium, tin, boron, germanium, gallium, lead, the transition metals, the lanthanides and/or actinides, and with reactive functions R₁ and optionally non-reactive and/or partially reactive functions R₂ and R₃ chemically bound on the surface of the element-oxygen network to the element and/or the oxygen atoms of the network, R₁ being contained in an amount of 0.01 to 98 wt%, based on the total weight of the reactive particles, and R₂ and R₃ in an amount of 0 to 97 wt%, based on the total weight of the reactive particles, with R₁ selected from the group consisting of OH, SH, COOH, NH₂, NHR₄, NCO, NCS and/or one or multiple radicals of compounds selected from the group consisting of metal acid esters, urethane, epoxide, epoxy, carboxylic acid anhydride, C=C double bond systems, alcohols, metal alkoxides, fats, esters, ethers, chelating agents, isocyanates, isothiocyanates and reactive resin components, with R₂ selected from the group consisting of one or multiple radicals of compounds selected from the group consisting of aromatic compounds, aliphatic compounds, fatty acid derivatives, esters and/or ethers, with R₃ selected from the group consisting of one or multiple resin radicals and with R₄ consisting of one or multiple radicals of compounds selected from the group consisting of acrylate, phenol, melamine, polyurethane, polyester, polyester imide, polysulfide, epoxide, polyamide, polyamide imide, polyvinyl formal resin, aromatic compound, aliphatic compounds, esters, ethers, metal alkoxides, fats and/or chelating agents, and with R₁, R₂ and R₃ being different from each other,
   wherein the element-oxygen network of the reactive particles comprises radicals of compounds selected from the group consisting of di-, tri- and/or polyisocyanates and/or di-, tri- and/or polyisothiocyanates as R₁, chemically bound via carbamate group(s) and/or thiocarbamate group(s) on the surface of the element-oxygen network and further providing at least one free and/or blocked isocyanate and/or isothiocyanate group in the element-oxygen network of the reactive particles, in an amount in the range of 0.01 to 98 wt% based on the total weight of the reactive particles,
B) 0 to 90 wt%, preferably 0.1 to 90 wt% of one or more conventional binders, and
C) 0 to 95 wt%, preferably 0.05 to 95 wt% of one or more conventional additives, solvents, pigments and/or fillers,
wherein the wt% of A), B) and C) are based on the total weight of the coating composition A) to C).

The coating composition according to the invention provides an outstanding thermal, chemical and mechanical resistance of the coatings providing long lifetimes of the devices under operating conditions. Furthermore, a highly improved storage stability of the compositions can be achieved. An excellent partial discharge resistance of the coated metal conductors and flexibility of the coatings can be provided by the coating composition of the present invention.

### Detailed Description

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The disclosure of ranges is intended as a continuous range including every value between the minimum and maximum values.

The reactive particles A) according to the invention are composed of an element-oxygen network, the surface of which contains the reactive functions R₁ and optionally non-reactive and/or partially reactive functions R₂ and R₃ which are chemically bound to the element-oxygen network, that means, to the element and/or the oxygen atoms of the network, wherein the radicals of di-, tri- and/or polyisocyanates and/or radicals of di-, tri- and/or polyisothiocyanates are chemically bound via carbamate group(s) and/or thiocarbamate group(s) on the surface of the element-oxygen network, and, further providing at least one free and/or blocked isocyanate and/or isothiocyanate group in the element-oxygen network of the reactive particles.

The reactive particles with the described functions R₁ to R₄ are particles whose average diameter is in the range of 1 nm to 300 nm, preferably in a range of 2 nm to 100 nm, particularly preferably in a range of 3 nm to 85 nm.

The term average diameter stated in the present description refers to the measurement with a Malvern Zetasizer according to ISO 13321.

The reactive particle A) is contained in an amount from 0.1 to 60 wt%, preferably 1 to 35 wt%, more preferably 3 to 30 wt%, based on the total weight of the coating composition.

The element-oxygen network of the reactive particle according to the invention comprises one or multiple of the above-mentioned elements of the series comprising silicon, zinc, aluminium, tin, boron, germanium, gallium, lead, the transition metals, the lanthanides and/or actinides which are chemically bound in the element-oxygen network. The network may contain one or more identical or different elements in a regular and/or irregular sequence chemically bound to the oxygen atoms in each case. Preferred is the use of the elements titanium, silicon, aluminium, boron and/or zirconium.

Furthermore, the element-oxygen network of the reactive particle according to the invention comprises the reactive functions R₁ and optionally non-reactive and/or partially reactive functions R₂ and R₃ chemically bound on the surface of the element-oxygen network to the element and/or the oxygen atoms of the network wherein the radicals of di-, tri- and/or polyisocyanates and/or radicals of di-, tri- and/or polyisothiocyanates are chemically bound via carbamate group(s) and/or thiocarbamate group(s) on the surface of the element-oxygen network.

The reactive function R₁ is contained in an amount of 0.01 to 98 vvt%, preferably 0.2 to 60 wt%, based on the total weight of the reactive particles.

It is essential according to the present invention that the element-oxygen network of the reactive particles comprises radicals of di-, tri-and/or polyisocyanates and/or radicals of di-, tri- and/or polyisothiocyanates as R₁, chemically bound via carbamate group(s) and/or thiocarbamate group(s) on the surface of the element-oxygen network and, further providing at least one free and/or blocked isocyanate and/or isothiocyanate group for further reactions with radicals of R₁ and/or with nucleophilic functional groups of binders of component B).

The carbamate group(s) and/or thiocarbamate group(s) bound radicals of di-. tri- and/or polyisocyanates and/or radicals of di-, tri- and/or polyisothiocyanates may be bound via one or more aryl and/or alkyl group as so-called spacer, to influence the reactivity of the reactive groups in the particles. Alkyl groups are preferred, for example, C₁ to C₆ alkyl groups, particularly C₁ to C₄ alkyl groups.

The element-oxygen network of the reactive particles comprises the radicals of the di-, tri- and/or polyisocyanates and/or radicals of di-, tri-and/or polyisothiocyanates as R₁ in a range of 0.01 to 98 wt%, preferably 0.2 to 60 wt%, the wt% based on the total weight of the reactive particle.

Examples of di-, tri- and/or polyisocyanates are methylene diphenyl diisocyanate, toluylene diisocyanate, hexamethylene diisocyanate, diisocyanato diphenyl ether, isophorone diisocyanate, tris(isocyanato)nonane, and/or the appropriate multifunctional related molecules such as isocyanurates, carbodiimides, uretdiones, ureas, urethanes, amides, imides, containing aromatic and/or aliphatic and/or cycloaliphatic isocyanate groups and/or isothiocyanate groups.

Preferred is the use of isocyanatofunctional urethane, e.g. 4-(4'-isocyanatophenylmethyl) phenyl urethane, blocked or un-blocked isocyanatofunctional oligo- or polyimide, blocked or un-blocked isocyanatofunctional oligo- or polyamide imide, amidino functional oligo- or polyamide imide, and/or or carboxyfunctional oligo- or polyamide imide, or mixtures thereof as radicals, chemically bound on the surface of the element-oxygen network via carbamate and/or thiocarbamate group(s).

R₁ can be selected additionally from the group consisting of OH, SH, COOH, NH₂, NHR₄, NCO, NCS, one or multiple radicals of compounds selected from the group consisting of metal acid esters, urethane, epoxide, epoxy, carboxylic acid anhydride, C=C double bond systems, alcohols, metal alkoxides, fats, esters, ethers, chelating agents and/or radicals of reactive resin components. Radicals of reactive resin components can be, for example, radicals of imides, amides, siloxanes and/or acrylates.

The non-reactive and/or partially reactive functions R₂ and R₃ are contained in an amount of 0 to 97 wt% in the reactive particles of (A), wherein R₂ is contained in an amount of 0 to 97 wt%, preferably of 0 to 50 wt%, and R₃ is contained in an amount of 0 to 97 wt%, preferably 0 to 50 wt%, wherein the percentages by weight are based on the total amount of the reactive particles.

The term non-reactive stated in the present description is intended to mean no reactivity in respect to nucleophilic, electrophilic, radical and/or electrocyclic reaction mechanisms, the term partially reactive stated in the present description is intended to mean poor reactivity in respect to nucleophilic, electrophilic, radical and/or electrocyclic reaction mechanisms. Partially reactive functions do not significantly take part during the curing of the coating of the composition according to the invention that means the poor reactivity is characterized by a conversion rate of 0.1 to 50% under typical wire enamel curing conditions as described in the Examples of the present description,

Examples of R₂ are radicals of compounds selected from the group consisting of aromatic compounds, e.g., radicals of phenyl, cresyl, nonylphenyl, radicals of aliphatic compounds, e.g., radicals of branched, linear, saturated, unsaturated alkyl radicals C₁ to C₃₀, radicals of fatty acid derivatives; radicals of linear or branched esters and/or ethers. Preferred are radicals of aromatic compounds, e.g., radicals of phenyl, cresyl, nonylphenyl, and radicals of linear or branched alkyl radicals C₄ to C₁₂ or mixtures thereof.

Examples of R₃ are radicals of compounds selected from the group consisting of one or multiple resin radicals, such as one or more polyurethane radical, polyester radical, polyester imide radical, tris-hydroxyl ethylisocyanurate (THEIC)-polyester imide radical, polyamide imide radical, polyimide radical, polytitanic ester resin radical and radicals of derivatives thereof, radicals of polysiloxane resins with organic derivatives, polysulfidic radical, polyamide radical, polyvinyl formal resin radical and/or polymer radical such as, e.g., radicals of polyacrylates, polyhydantoins, polybenzimidazoles. Preferred is the use of radicals of polyamide imide resins, which may contain polyurethane, polyester or polyester imide structures with terminal urethane moiety, polyurethane radical, polyamide radical, polyimide radical, polyester radical, THEIC-polyester radical, polyester imide radical and/or radical of THEIC polyester imide.

Examples of R₄ are radicals of acrylate, phenol, melamine, polyurethane, polyester, polyester imide, polysulfide, epoxide, polyamide, polyamide imide, polyvinyl formal resins; aromatic compounds, e.g., radicals of phenyl, cresyl, nonylphenyl; radicals of aliphatic compounds, e.g., branched, linear, saturated, unsaturated alkyl radicals with C₁ to C₃₀; radicals of esters and/or ethers, e.g., radicals of methyl glycolate, methyl diglycolate, ethyl glycolate, butyl diglycolate, diethylene glycolate. triethylene glycolate; radicals of metal alkoxides, e.g., radicals of 1-hydroxymethyl-propane-1,1-dimethylolate, 2,2-bis-(hydroxymethyl)-1,3-propane diolate, 2-hydroxypropane-1,3-diolate, ethylene glycolate, neopentyl glycolate, butanolate, isoprpanolate, benzyl alcoholate, hexane diolate, butane diolate; radicals of fats, e.g., radicals of castor oil and/or radicals of chelating agents, e.g., radicals of aminotriethanolate, aminodiethanolate, acetyl acetonate, ethyl acetoacetate, lactate. Preferred is the use of radicals of acrylate resin, aminotriethanolate, acetyl acetonate, polyurethane resin, polyamide imide resin, ethylene glycolate, butanolate, isopropanolate, benzyl alcoholate and/or butyl diglycolate as R₄.

The radicals R₁, R₂ and R₃ are different from each other.

In addition to the reactive particles A) according to the invention, monomeric and/or polymeric element-organic compounds may be contained in the coating composition. Examples of polymeric element-organic compounds include inorganic-organic hybrid polymers as mentioned, for example, in DE198 41 977. Examples of monomeric element-organic compounds include ortho-titanic acid esters and/or ortho-zirconic acid esters such as, for example, nonyl, cetyl, stearyl, triethanolamine, diethanolamine, acetyl acetone, acetoacetic acid esters, tetra-isopropyl, cresyl, tetrabutyl titanate or zirconate, and titanium tetralactate, hafnium and silicon compounds, e.g., hafnium tetrabutoxide and tetraethyl silicate and/or various silicone resins. Additional polymeric and/or monomeric element-organic compounds of this kind may be contained in the composition according to the invention in an amount from 0 to 70 wt%, based on the total weight of the coating composition

The preparation of component A) may take place by conventional hydrolysis and condensation reactions of appropriate element-organic or element-halogen compounds in the presence of organic reactants corresponding to functions R₁ to R₃, as known to those skilled in the art.

Similarly, organic resin and/or components of the reactive particle may be reacted with corresponding element-oxide compounds to the corresponding reactive particles.

Such methods of preparation are known to the skilled person, see, e.g., Ralph K. ller, John Wiley and Sons, "The Chemistry of Silica", New York, p. 312 ff, 1979.

For example, component A) can be prepared from products of the SNOWTEX® product line from Nissan Chemicals Inc.

As component B) binders can be used which are known for coating of metal conductors, such as electrically conductive wires. Such binders may be polyesters, polyester imides, polyamides, polyamide imides, polyimides, THEIC polyester imides, polytitanic acid ester-THEIC ester imides, phenolic resins, melamine resins, polymethacrylimides, polyimides, polybismaleinimides, polyether imides, polybenzoxazine diones, polyhydantoins, polyvinyl formats, polyvinyl acetals and/or blocked isocyanates, also epoxides and/or acrylate resins, see also, for example, polyesters and THEIC-polyester imides in Behr, "Hochtemperaturbeständige Kunststoffe" Hanser Verlage, Munich 1969, in Cassidy, "Thermally Stable Polymers" New York: Marcel Dekker, 1980; in Frazer, "High Temperature Resistant Polymers" New York: Interscience, 1968: in Mair, Kunststoffe 77 (1987) 204).

The use of polyamide imides and/or polyimides as component B) is preferred. The polyamide imides may contain polyurethane, polyester and/or polyester imide structures.

Component B) can be used in the composition of the invention in a range of 0 to 90 wt%, and optionally 0.1 to 90 wt%. Preferred is a range of 0.1 to 60 wt%, wherein the percentages by weight are based on the total weight of the coating composition (A) to (C).

Examples of polyamide imides are condensation products of polyvalent, aliphatic, aromatic and/or cycloaliphatic carboxylic acids and anhydrides thereof, and polyvalent aliphatic, aromatic and/or cycloaliphatic isocyanates. Instead of or in addition to above mentioned polyvalent isocyanates, the respective amines can be used for the formation of polyamide imides which are used for compositions according to this invention. Also a proportion of monofunctional carboxylic acids and anhydrides thereof and/or isocyanates and/or amines can be used. Furthermore, aminoalcohols may be used, resulting in polyamide imides with a proportion of urethane bonds. Additionally, polyesters may be used in the formation process of the polyamide imide resin, resulting in a proportion of urethane bonds and/or a higher proportion of amide bonds. Preferred are polyamide imide resins prepared from, e.g., trimellitic anhydride, adipic acid and/or terephthalic acid and diphenyl methane diisocyanate, toluylene diisocyanate, hexamethylene diisocyanate, diisocyanato diphenyl ether, isophorone diisocyanate, tris(isocyanato)nonane, methylene dianiline or diamino diphenyl ether.

Examples of polyimides are condensation products of polyvalent aliphatic, aromatic and/or cycloaliphatic carboxylic acid anhydrides, and polyvalent aliphatic, aromatic and/or cycloaliphatic isocyanates. Instead of or in addition to the above mentioned polyvalent isocyanates, the respective amines can be used for the formation of polyamide imides which are used for compositions according to this invention. Also a proportion of monofunctional carboxylic acid anhydrides and/or isocyanates and/or amines can be used. The use of carboxylic acids or of molecules with both a carboxylic acid and carboxylic acid anhydride functionality is also possible to reach a proportion of amide bonds in the polymer. Also, aminoalcohols may be used, resulting in polyimides with a proportion of urethane bonds. Additionally, polyesters may be used in the formation process of the polyimide resin, resulting in a proportion of urethane and/or ester bonds and/or a higher proportion of amide bonds. Preferred are polyimide resins prepared from, e.g., pyromellitic anhydride and diphenyl methane diisocyanate, toluylene diisocyanate, diisocyanato diphenyl ether, hexamethylene diisocyanate, isophorone diisocyanate, tris(isocyanato)nonane, methylene dianiline or diamino diphenyl ether.

Examples of polyesters are polyesters with heterocyclic, nitrogen-containing rings, for example, polyesters with imide and hydantoin and benzimidazole structures condensed into the molecule. The polyesters include, in particular, condensation products of polyvalent, aliphatic, aromatic and/or cycloaliphatic carboxylic acids and anhydrides thereof, polyhydric alcohols, in the case of imide-containing polyester amino group-containing compounds optionally with a proportion of monofunctional compounds, for example, monohydric alcohols. Saturated polyester imides are based preferably on terephthalic acid polyesters which, in addition to diols, may also contain polyols and, as an additional dicarboxylic acid component, a reaction product of diaminodiphenylmethane and trimellitic anhydride. Also, unsaturated polyester resins and/or polyester imides may also be used.

Examples of polyamides are thermoplastic polyamides such as poly(hexamethylenediamineadipate) or poly(caprolactam).

Examples of phenolic resins and/or polyvinyl formals which may be used as component B) include novolaks obtainable by polycondensation of phenols and aldehydes, or polyvinyl formals obtainable from polyvinyl alcohols and aldehydes and/or ketones.

Blocked isocyanates may also be used as component B) as known to those in the art, such as, e.g., adducts of polyols, amines, CH-acidic compounds (e.g., acetoacetic acid esters, malonic esters, etc.) and diisocyanates, cresols and phenols usually being used as blocking agents.

The composition according to the invention may comprise conventional additives, solvents, pigments and/or fillers as component C), as such known to those in the art, in a range of 0 to 95 wt%, based on the total weight of the composition according to the invention. The amount of components of C) in the composition of the invention is depending on the respective application, and is known at a person skilled in the art.

Conventional additives include, for example, conventional enamel additives, such as, extenders, plasticising components, accelerators (for example metal salts, substituted amines), or catalysts, such as, tetrabutyl titanate, isopropyl titanate, cresol titanate, other titanate derivates, the polymeric forms thereof, dibutyl tin dilaurate, further tin catalysts, other metal-based catalysts, amine catalysts (such as, diazabicycloundecene, diazabicyclooctane and/or other amine catalysts known to persons skilled in the art), further initiators (for example photo initiators, heat-responsive initiators), stabilisers (for example, hydroquinones, quinones, alkylphenols, alkylphenol ethers), defoamers and flow control agents. Such conventional additives can be used, for example, in amounts of 0.01 to 50 wt%, based on the total weight of the composition according to the invention.

In order to increase solubility, the compositions may contain organic solvents such as, for example, aromatic hydrocarbons, N-methylpyrrolidone, N-ethylpyrrolidone, N-octylpyrrolidone, cresols, phenols, xylenols, caprolactone, cyclohexanone, propylene carbonate, styrenes, vinyl toluene, methyl acrylates. The compositions according to the invention may optionally contain, for example, 30 to 95 wt% of organic solvents, based on the total weight of the composition according to the invention.

Pigments are, for example, colour-imparting inorganic and/or organic pigments such as titanium dioxide or carbon black, and special-effect pigments such as metal flake pigments and/or pearlescent pigments, as known to those skilled in the art, which include also dyes as known in the art, which can be used in a range of, for example, 0.1 to 60 wt% based on the total weight of the composition according to the invention.

Fillers are, for example, chalk, talc, aluminium hydroxide, quartz flour, slate flour, clay or microdolomite, which can be used in a range of 0.1 to 60 wt% based on the total weight of the composition according to the invention.

Optionally, the composition according to the invention may also be mixed with conventional wire coatings and then applied by conventional methods.

The coating composition according to the invention may be applied by conventional methods independently of type and diameter of the electrically conductive wire used.

The coating composition according to the invention may be contained as a constituent of a multi-layer coating of the wire. This multi-layer coating may contain at least one coating composition according to the invention.

According to the invention, the wires may be coated with or without coating layers already present. Existing coating layers may include, for example, insulation coatings and flame retardant coatings. In such cases, the layer thickness of the coating according to the invention may differ considerably.

The wire may be pre-coated with typical wire coating compositions as known by the art based on, for example, polyester imides, polyamides, polyamide imides, polyesters, THEIC-polyester imides and combinations thereof, usually as a multi-layer coating.

The coating composition according to the invention may be applied, e.g. as a top enamel on the last cured coating layer of the multi-layer wire coating, in conventional layer thicknesses, for example, 0.3 to 25 µm per pass.

It is also possible to carry out further coatings by way of the coating according to the invention, for example, further insulation coatings. Such coatings may also be used, e.g., as a top coat for the creation of desired surface properties, for special functionalities and for smoothing. For example, compositions based on polyamides are particularly suitable as top coats for creating special functionalities such as self-bounding properties, as known in the art.

Furthermore, the composition according to the invention is also suitable as a one-coat application (single layer system).

The coating may be dried in an oven. Coating and drying may optionally take place several times in succession. The ovens may be arranged horizontally or vertically, the coating conditions such as duration and number of coatings, stoving temperature, coating speed depending on the nature of the wire to be coated. For example, the coating temperatures may be in the range from room temperature to 400 °C. Moreover, ambient temperatures above 400 °C, for example, up to 800 °C and above may also be possible during coating without any discernable deterioration in the quality of the coating according to the invention. The drying may be supported by irradiation with infrared (IR) and/or near infrared (NIR) radiation with techniques known at a person skilled in the art.

During the drying and stoving, the components of the composition according to the invention, particularly component A) and component B) may undergo a chemical reaction with one another. Depending on the chemical nature of components A) and B), various chemical reactions are possible, for example, polycondensation reactions, polymerisation reactions, addition reactions.

The use of the composition according to the invention may take place irrespective of the nature and diameter of the wire; for example, wires with a diameter from 5 µm to 6 mm may be coated. Suitable wires include conventional metal conductors, for example, of copper, aluminium, zinc, iron, gold, silver or alloys thereof.

According to the invention, the composition may be applied in conventional layer thicknesses. It is also possible to apply thin layers without affecting the partial discharge resistance obtained according to the invention, and the adhesion, strength and extensibility of the coatings. The dry layer thickness may vary in accordance with the standardised values for thin and thick wires. For example, the dry layer thicknesses can be between 1 and 150µm, strongly depending on the wire diameter.

The invention will be described with reference to the following examples.

### Examples

### Wire Coating Compositions according to the Invention

### (Examples 1-9)

### Example 1

To a 2 litre three-necked-flask with stirrer and thermometer was added 23 parts by weight of a waterless colloidal silica solution (50 nm), 20 parts by weight of 1,3-dioxo-2-benzofuran-5-carboxylic acid, 26 parts by weight of 4,4'-ethylene diphenyl diisocyanate and 0.2 parts by weight of a metal acid ester catalyst. The mixture was gradually heated up to 150 °C until carbon dioxide formation completed. This material was then diluted with 1-methyl-2-pyrrolidone, xylene and SOLVESSO® 100 to obtain transparent enamel. The wire coating had a solid content of 33.0% (1 g, 1 h, 180 °C; DIN EN ISO 3251) and a viscosity of 760 mPas (25 °C; DIN 53015).

### Example 2

To a 2 litre three-necked-flask with stirrer and thermometer was added 31 parts by weight of a titanium dioxide solution (50 nm), 20 parts by weight of 1,3-dioxo-2-benzofuran-5-carboxylic acid, 26 parts by weight of 4,4'-methylene diphenyl diisocyanate and 0.2 parts by weight of a metal acid ester catalyst. The mixture was gradually heated up to 150 °C until carbon dioxide formation completed. This material was diluted with 1-methyl-2-pyrrolidone, xylene and SOLVESSO® 100 to obtain transparent enamel. The wire coating had a solid content of 33.8% (1 g, 1 h, 180 °C; DIN EN ISO 3251) and a viscosity of 840 mPas (25 °C; DIN 53015).

### Example 3

To a 2 litre three-necked-flask with stirrer and thermometer was added 37 parts by weight of a fumed aluminium oxide solution (80 nm), 20 parts by weight of 1,3-dioxo-2-benzofuran-5-carboxylic acid, 26 parts by weight of 4,4'-methylene diphenyl diisocyanate and 0.2 parts by weight of a metal acid ester catalyst. The mixture was gradually heated up to 150 °C until carbon dioxide formation completed. This material was diluted with 1-methyl-2-pyrrolidone, xylene and SOLVESSO® 100 to obtain transparent enamel. The wire coating had a solid content of 32.9% (1 g, 1 h, 180 °C; DIN EN ISO 3251) and a viscosity of 630 mPas (25 °C; DIN 53015).

### Example 4

To a 2 litre three-necked-flask with stirrer and thermometer was added 26 parts by weight of a waterless colloidal silica solution (50 nm), 11 parts by weight of pyromellitic dianhydride, 9 parts by weight of benzene-1,3-dicarboxylic acid, 27 parts by weight 4,4'-methylene diphenyl diisocyanate and 0.2 parts by weight of a metal acid ester catalyst. The mixture was gradually heated up to 150 °C until carbon dioxide formation completed. This material was diluted with 1-ethyl-2-pyrrolidone, xylene and SOLVESSO® 100 to obtain transparent enamel The wire coating had a solid content of 32.2% (1 g, 1 h, 180 °C: DIN EN ISO 3251) and a viscosity of 700 mPas (25 °C; DIN 53015).

### Example 5

To a 2 litre three-necked-flask with stirrer and thermometer was added 27 parts by weight of a waterless colloidal silica solution (50 nm), 13 parts by weight of dodecanedioic acid, 13 parts by weight of pyromellitic dianhydride, 29 parts by weight of 4,4'-methylene diphenyl diisocyanate and 0.24 parts by weight of a metal acid ester catalyst. The mixture was gradually heated up to 150 °C until carbon dioxide formation completed. This material was diluted with 1-methyl-pyrrolidone, xylene and SOLVESSO® 100 to obtain transparent enamel. The wire coating had a solid content of 35.4% (1 g, 1 h, 180 °C; DIN EN ISO 3251) and a viscosity of 890 mPas (25 °C, DIN 53015).

### Example 6

To a 2 litre three-necked-flask with stirrer and thermometer was added 22 parts by weight of a waterless colloidal silica solution (50 nm), 9 parts by weight of dodecanedioic acid, 9 parts by weight of 1,3-dioxo-2-benzofuran-5-carboxylic acid, 24 parts by weight of diphenyl diisocyanate and 0.16 parts by weight of a metal acid ester catalyst. The mixture was gradually heated up to 150°C until carbon dioxide formation completed. This material was diluted with Dihydrofuran-2(3H)-one /1,8-Diazabicyclo[5.4.0]undec-7-ene (3:1), xylene and SOLVESSO® 100 to obtain transparent enamel. The wire coating had a solid content of 31.1% (1 g, 1 h, 180 °C; DIN EN ISO 3251) and a viscosity of 610 mPas (25 °C; DIN 53015).

### Example 7

To a 2 litre three-necked-flask with stirrer and thermometer was added 25 parts by weight of a waterless colloidal silica solution (50 nm), 20 parts by weight of 1,3-dioxo-,2-benzofuran-5-carboxylic acid, 18 parts by weight of 2,4-diisocyanato-1-methyl-benzene and 0.18 parts by weight of a metal acid ester catalyst. The mixture was gradually heated up to 150 °C until carbon dioxide formation completed. This material was diluted with 1-ethyl-2-pyrrolidone and xylene to obtain transparent enamel. The wire coating had a solid content of 33,3% (1 g, 1 h, 180 °C, DIN EN ISO 3251) and a viscosity of 720 mPas (25 °C, DIN 53015).

### Example 8

To a 2 litre three-necked-flask with stirrer and thermometer was added 24 parts by weight of a waterless colloidal silica solution (50 nm), 20 parts by weight of 1,3-dioxo-2-benzofuran-5-carboxylic acid, 18 parts by weight of 1,6-diisocyanatohexane and 0.19 parts by weight of a metal acid ester catalyst. The mixture was gradually heated up to 150°C until carbon dioxide formation completed. This material was diluted with 1-methyl-2-pyrrolidone and xylene to obtain transparent enamel. The wire coating had a solid content of 29.1% (1g, 1 h, 180 °C; DIN EN ISO 3251) and a viscosity of 490 mPas (25 °C; DIN 53015).

### Example 9

To a 2 litre three-necked-flask with stirrer and thermometer was added 24 parts by weight of a waterless colloidal silica solution (50 nm), 20 parts by weight of 1,3-dioxo-2-benzofuran-5-carboxylic acid, 11 parts by weight of 4,4'-methylene diphenyl diisocyanate, 10 parts by weight of 1,6-diisocyanatohexane and 0.19 parts by weight of a metal acid ester catalyst. The mixture was gradually heated up to 150 °C until carbon dioxide formation completed. This material was diluted with 1-methyl-2-pyrrolidone and xylene to obtain transparent enamel. The wire coating had a solid content of 31.4% (1 g, 1 h, 180°C; DIN EN ISO 3251) and a viscosity of 530 mPas (25°C; DIN 53015).

### Wire Coating Compositions according to Prior Art (Comparative Examples 1-4)

### Comparative Example 1

commercially available polyester based wire enamel:
PEI DuPont^{™} VOLTATEX^{®} 7140

### Comparative Examples 2

commercially available wire enamel according to US 6,908,692:
TPEI DuPont^{™} VOLTATEX^{®} 7740

### Comparative Example 3

commercially available wire enamel according to US 6,908,692 as base coat and polyamid imid wire enamel as top coat:
TPEI DuPont^{™} VOLTATEX^{®} 7740 and PAI DuPont^{™} VOLTATEX^{®} 8227

### Comparative Examples 4

commercially available polyamid imid wire enamel:
PAI DuPont^{™} VOLTATEX^{®} 8132.

### Application

Copper wires with a bare wire thickness of 1.00 mm were coated on a conventional wire coating plant with the wire coating compositions described according to Comparative Examples 1 to 4 and Examples 1 to 9 wherein wire coating composition of Example 1 has also been applied as top coat over TPEI DuPont^{™} VOLTATEX^{®} 7740, resulting in Example 1a. Application conditions (typical wire enamel curing conditions) can be found in following Table 1:

**TABLE 1**

| **Application conditions** | |
|---|---|
| Oven | VEL |
| Temperature | 550 °C |
| Coating system (Number of coats) | 10 (single coat) or 8 (base coat) + 3 (top coat) |
| Application | Nozzle |
| Conductor diameter | 1,00 mm |
| Speed | 45 m/min |

### Test Results: Technical data of the coated copper wires (according to DIN 46453 and DIN EN 60851)

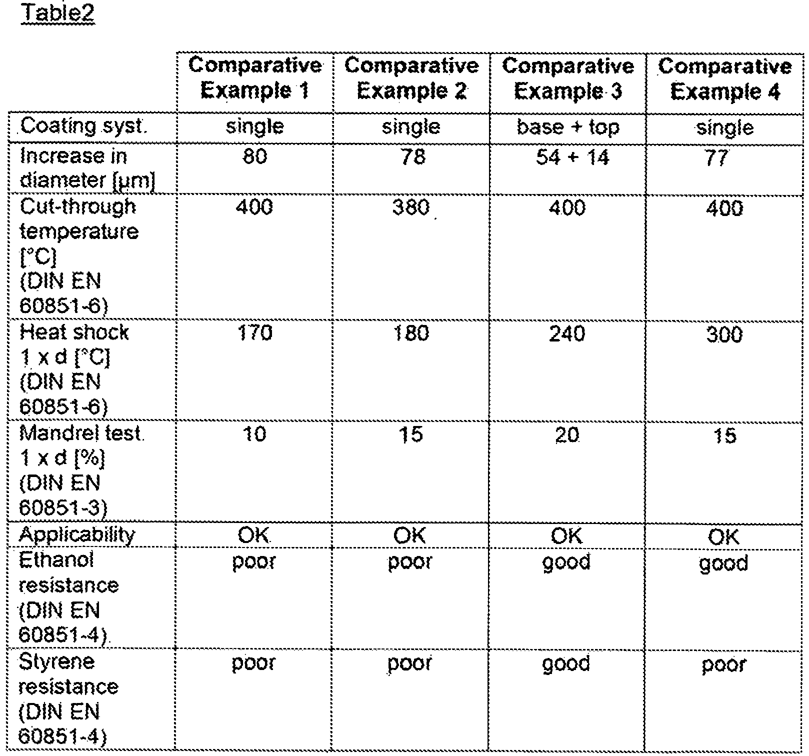

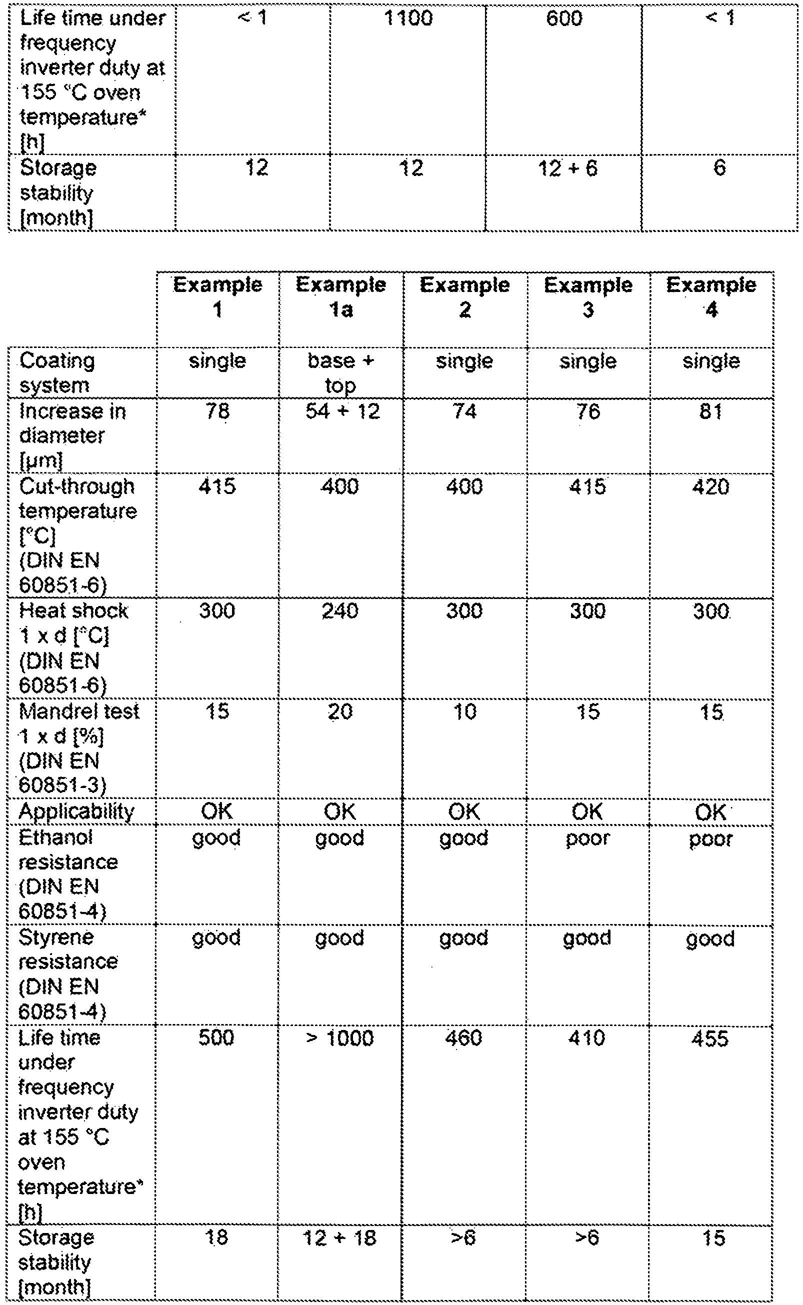

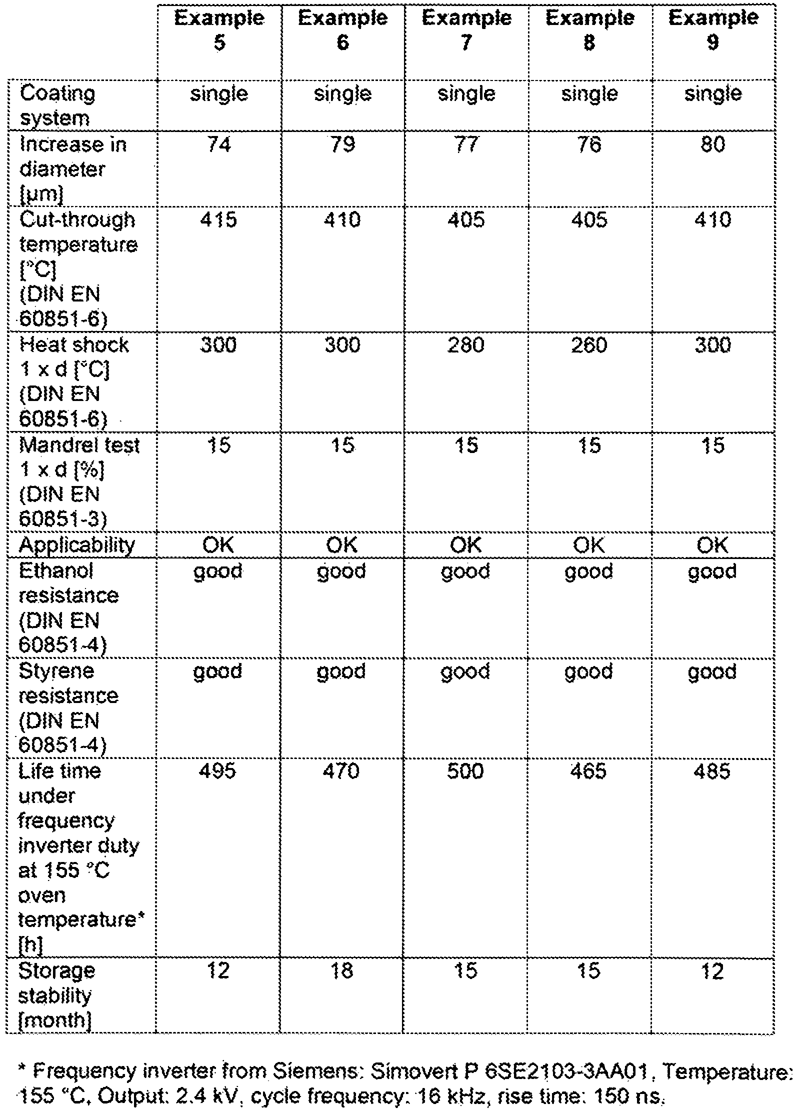

## Claims

1. A wire coating composition comprising
A) 0.1 to 60 wt.% of one or more reactive particles having an average diameter in a range of 1 to 300 nm, the particles based on an element-oxygen network with one or multiple elements of the series comprising silicon, zinc, aluminium, tin, boron, germanium, gallium, lead, the transition metals, the lanthanides and/or actinides, and with reactive functions R₁ and optionally non-reactive and/or partially reactive functions R₂ and R₃ chemically bound on the surface of the element-oxygen network to the element and/or the oxygen atoms of the network, R₁ being contained in an amount of 0.01 to 98 wt%, based on the total weight of the reactive particles and R₂ and R₃ in an amount of 0 to 97 wt%, based on the total weight of the reactive particles, with R₁ selected from the group consisting of OH, SH, COOH, NH₂, NHR₄, NCO, NCS and/or one or multiple radicals of compounds selected from the group consisting of metal acid esters, urethane, epoxide, epoxy, carboxylic acid anhydride, C=C double bond systems, alcohols, metal alkoxides, fats, esters, ethers, chelating agents, isocyanates, isothiocyanates and reactive resin components, with R₂ selected from the group consisting of one or multiple radicals of compounds selected from the group consisting of aromatic compounds, aliphatic compounds, fatty acid derivatives, esters and/or ethers, with R₃ selected from the group consisting of one or multiple resin radicals and with R₄ consisting of one or multiple radicals of compounds selected from the group consisting of acrylate, phenol, melamine, polyurethane, polyester, polyester imide, polysulfide, epoxide, polyamide, polyamide imide, polyvinyl formal resin, aromatic compound, aliphatic compounds, esters, ethers, metal alkoxides, fats and/or chelating agents, and with R₁, R₂ and R₃ being different from each other,
wherein the element-oxygen network of the reactive particles comprises radicals of compounds selected from the group consisting of di-, tri- and/or polyisocyanates and/or di-, tri- and/or polyisothiocyanates as R₁ chemically bound via carbamate group(s) and/or thiocarbamate group(s) on the surface of the element-oxygen network and, further providing at least one free and/or blocked isocyanate and/or isothiocyanate group in the element-oxygen network of the reactive particles, in an amount in the range of 0.01 to 98 wt% based on the total weight of the reactive particle,
B) 0 to 90 wt% of one or more conventional binders, and
C) 0 to 95 wt% of one or more conventional additives, solvents, pigments and/or fillers,
wherein the wt% of A), B) and C) are based on the total weight of the coating composition A) to C).

2. The wire coating composition of claim 1 wherein the reactive particles of component A) have an average diameter in the range of 2 to 100 nm.

3. The wire coating composition of claim 1 and 2 wherein the reactive particules of component A) are contained in an amount of 3 to 30 wt% based on the total weight of the coating composition.

4. The wire coating composition of claims 1 to 3 wherein the element-oxygen network of the reactive particles A) comprises the elements titanium, silicon, aluminium, boron and/or zirconium.

5. The wire coating composition of claims 1 to 4 wherein the reactive function R₁ is contained in an amount of 0.2 to 60 wt% based on the total weight of the reactive particles.

6. The wire coating composition of claims 1 to 5 wherein the R₁ functions are radicals of di-, tri- and/or polyisocyanates and/or radicals of di-, tri- and/or polyisothiocyanates, and wherein the R₁ functions are present in an amount of 0.2 to 60 wt% based on the total weight of the reactive particles.

7. The wire coating composition of claims 1 to 6 wherein the reactive functions R₁ are radicals of isocyanatofunctional urethane, 4-(4'-isocyanatophenylmethyl) phenyl urethane, blocked or un-blocked isocyanatofunctional oligo- or polyimide, blocked or un-blocked isocyanatofunctional oligo- or polyamide imide, amidino functional oligo- or polyamide imide, and/or or carboxyfunctional oligo- or polyamide imide, or mixtures thereof, chemically bound on the surface of the element-oxygen network via carbamate and/or thiocarbamate group(s).

8. A process for coating electrically conductive wires by applying the coating composition of claims 1 to 7 and curing the coating composition.

9. The process of claim 8 wherein the electrically conductive wires are pre-coated.

10. The process of claim 8 and 9 wherein the coating composition is used as one-coat application.

11. An electrically conductive wire coated with the coating composition of claims 1 to 7.

## Patentansprüche

1. Drahtbeschichtungszusammensetzung umfassend
A) 0,1 bis 60 Gew.-% eines oder mehrerer reaktiver Teilchen, die einen durchschnittlichen Durchmesser in einem Bereich von 1 bis 300 nm aufweisen, wobei die Teilchen auf einem Element-Sauerstoff-Netzwerk mit einem oder mehreren Elementen der Serie enthaltend Silicium, Zink, Aluminium, Zinn, Bor, Germanium, Gallium, Blei, den Übergangsmetallen, den Lanthaniden und/oder Actiniden und mit reaktiven Funktionen R₁ und wahlweise nichtreaktiven und/oder teilweise reaktiven Funktionen R₂ und R₃, die an der Oberfläche des Element-Sauerstoff-Netzwerks an das Element und/oder die Sauerstoffatome des Netzwerks chemisch gebunden sind, basieren, wobei R₁ in einer Menge von 0,01 bis 98 Gew.-%, auf das Gesamtgewicht der reaktiven Teilchen bezogen, und R₂ und R₃ in einer Menge von 0 bis 97 Gew.-%, auf das Gesamtgewicht der reaktiven Teilchen bezogen, enthalten ist/sind, wobei R₁ aus der Gruppe ausgewählt ist bestehend aus OH, SH, COOH, NH₂, NHR₄, NCO, NCS und/oder einem oder mehreren Radikalen von Verbindungen ausgewählt aus der Gruppe bestehend aus Metallsäureestern, Urethan, Epoxid, Epoxy, Carbonsäureanhydrid, C=C-Doppelbindungssystemen, Alkoholen, Metallalkoxiden, Fetten, Estern, Ethern, Chelatbildnern, Isocyanaten, Isothiocyanaten und reaktiven Harzkomponenten, wobei R₂ aus der Gruppe ausgewählt ist bestehend aus einem oder mehreren Radikalen von Verbindungen ausgewählt aus der Gruppe bestehend aus aromatischen Verbindungen, aliphatischen Verbindungen, Fettsäurederivaten, Estern und/oder Ethern, wobei R₃ aus der Gruppe ausgewählt ist bestehend aus einem oder mehreren Harzradikalen und wobei R₄ aus einem oder mehreren Radikalen von Verbindungen besteht ausgewählt aus der Gruppe bestehend aus Acrylat, Phenol, Melamin, Polyurethan, Polyester, Polyesterimid, Polysulfid, Epoxid, Polyamid, Polyamidimid, Polyvinylformalharz, aromatischer Verbindung, aliphatischen Verbindungen, Estern, Ethern, Metallalkoxiden, Fetten und/oder Chelatbildnern und wobei R₁, R₂ und R₃ voneinander verschieden sind,
wobei das Element-Sauerstoff-Netzwerk der reaktiven Teilchen Radikale der Verbindungen umfasst ausgewählt aus der Gruppe bestehend aus Di-, Tri- und/oder Polyisocyanaten und/oder Di-, Tri- und/oder Polyisothiocyanaten als R₁ chemisch über Carbamatgruppe(n) und/oder Thiocarbamatgruppe(n) auf der Oberfläche des Element-Sauerstoff-Netzwerks gebunden und ferner bereitstellend mindestens einer freien und/oder geblockten Isocyanat- und/oder Isothiocyanatgruppe in dem Element-Sauerstoff-Netzwerk der reaktiven Teilchen in einer Menge im Bereich von 0,01 bis 98 Gew.-%, auf das Gesamtgewicht des reaktiven Teilchens bezogen,
B) 0 bis 90 Gew.-% eines oder mehrerer herkömmlicher Bindemittel und
C) 0 bis 95 Gew.-% eines oder mehrerer herkömmlicher Zusatzmittel, Lösungsmittel, Pigmente und/oder Füllstoffe,
wobei die Gew.-% von A), B) und C) auf das Gesamtgewicht der Beschichtungszusammensetzung A) bis C) bezogen sind.

2. Drahtbeschichtungszusammensetzung nach Anspruch 1, wobei die reaktiven Teilchen der Komponente A) einen durchschnittlichen Durchmesser im Bereich von 2 bis 100 nm aufweisen.

3. Drahtbeschichtungszusammensetzung nach Anspruch 1 und 2, wobei die reaktiven Teilchen der Komponente A)in einer Menge von 3 bis 30 Gew.-%, auf das Gesamtgewicht der Beschichtungszusammensetzung bezogen, enthalten sind.

4. Drahtbeschichtungszusammensetzung nach den Ansprüchen 1 bis 3, wobei das Element-Sauerstoff-Netzwerk der reaktiven Teilchen A) die Elemente Titan, Silicium, Aluminium, Bor und/oder Zirconium umfasst.

5. Drahtbeschichtungszusammensetzung nach den Ansprüchen 1 bis 4, wobei die reaktive Funktion R₁ in einer Menge von 0,2 bis 60 Gew.-%, auf das Gesamtgewicht der reaktiven Teilchen bezogen, enthalten ist.

6. Drahtbeschichtungszusammensetzung nach den Ansprüchen 1 bis 5, wobei die R₁-Funktionen Radikale von Di-, Tri- und/oder Polyisocyanaten sind und/oder wobei die R₁-Funktionen in einer Menge von 0,2 bis 60 Gew.-%, auf das Gesamtgewicht der reaktiven Teilchen bezogen, vorliegen.

7. Drahtbeschichtungszusammensetzung nach den Ansprüchen 1 bis 6, wobei die reaktiven Funktionen R₁ Radikale von isocyanatfunktionellem Urethan, 4-(4'-Isocyanatphenylmethyl)phenylurethan, geblocktem oder ungeblocktem isocyanatfunktionellem Oligo- oder Polyimid, geblocktem oder ungeblocktem isocyanatfunktionellem Oligo- oder Polyamidimid, amidinfunktionellem Oligo- oder Polyamidimid und/oder carboxfunktionellem Oligo- oder Polyamidimid oder Mischungen davon sind, die chemisch an die Oberfläche des Element-Sauerstoff-Netzwerks über Carbamat- und/oder Thiocarbamatgruppe(n) gebunden sind.

8. Verfahren zum Beschichten von elektrisch leitfähigen Drähten durch Aufbringen der Beschichtungszusammensetzung nach den Ansprüchen 1 bis 7 und Aushärten der Beschichtungszusammensetzung.

9. Verfahren nach Anspruch 8, wobei die elektrisch leitfähigen Drähte vorbeschichtet sind.

10. Verfahren nach Anspruch 8 und 9, wobei die Beschichtungszusammensetzung als Einschichtauftrag verwendet wird.

11. Elektrisch leitfähiger Draht, der mit der Beschichtungszusammensetzung nach den Ansprüchen 1 bis 7 beschichtet ist.

## Revendications

1. Composition de revêtement de fil comprenant
A) de 0,1 à 60 % en poids d'une ou plusieurs particules réactives ayant un diamètre moyen compris dans la plage allant de 1 à 300 nm, les particules étant basées sur un réseau élément-oxygène avec un ou plusieurs éléments de la série comprenant le silicium, le zinc, l'aluminium, l'étain, le bore, le germanium, le gallium, le plomb, les métaux de transition, les lanthanides et/ou les actinides, et avec des fonctions réactives R₁ et facultativement des fonctions non réactives et/ou partiellement réactives R₂ et R₃ chimiquement liées sur la surface du réseau élément-oxygène à l'élément et/ou aux atomes d'oxygène du réseau, R₁ étant contenu en une quantité de 0,01 à 98 % en poids, par rapport au poids total des particules réactives et R₂ et R₃ en une quantité de 0 à 97 % en poids, par rapport au poids total des particules réactives, R₁ étant choisi dans le groupe constitué par OH, SH, COOH, NH₂, NHR₄, NCO, NCS et/ou un ou plusieurs radicaux de composés choisis dans le groupe constitué par les ester d'acide métallique, l'uréthane, l'époxyde, l'époxy, l'anhydride d'acide carboxylique, les systèmes à liaisons doubles C=C, les alcools, les alcoxydes métalliques, les graisses, les esters, les éthers, les agents chélatants, les isocyanates, les isothiocyanates et les composants de résine réactifs, R₂ étant choisi dans le groupe constitué par un ou plusieurs radicaux de composés choisis dans le groupe constitué par les composés aromatiques, les composés aliphatiques, les dérivés d'acide gras, les esters et/ou les éthers, R₃ étant choisi dans le groupe constitué par un ou plusieurs radicaux de résine et R₄ étant choisi dans le groupe constitué par un ou plusieurs radicaux de composés choisis dans le groupe constitué par l'acrylate, le phénol, la mélamine, le polyuréthane, le polyester, le polyester imide, le polysulfure, l'époxyde, le polyamide, le polyamide imide, la résine de polyvinylfomal, les composés aromatiques, les composés aliphatiques, les esters, les éthers, les alcoxydes métalliques, les graisses et/ou les agents chélatants, et R₁, R₂ et R₃ étant différents les uns des autres,
où le réseau élément-oxygène des particules réactives comprend les radicaux de composés choisis dans le groupe constitué par les di-, tri- et/ou polyisocyanates et/ou di-, tri- et/ou polyisothiocyanates car R₁ est chimiquement lié par le biais d'un ou plusieurs groupes carbamate et/ou un ou plusieurs groupes thiocarbamate sur la surface du réseau élément-oxygène et offre en outre au moins un groupe isocyanate et/ou siothiocyanate libre et/ou bloqué dans le réseau élément-oxygène de la particule réactive, en une quantité comprise dans la plage allant de 0,01 à 98 % en poids, par rapport au poids total de la particule réactive,
B) de 0 à 90 % en poids d'un ou plusieurs liants conventionnels, et
C) de 0 à 95 % en poids d'un ou plusieurs additifs, solvants, pigments et/ou charges conventionnels,
où les % en poids de A), B) et C) sont basés sur le poids total de la composition de revêtement A) à C).

2. Composition de revêtement de fil selon la revendication 1, dans laquelle les particules réactives du composant A) ont un diamètre moyen compris dans la plage allant de 2 à 100 nm.

3. Composition de revêtement de fil selon les revendications 1 et 2, dans laquelle les particules réactives du composant A) sont contenues en une quantité de 3 à 30 % en poids, par rapport au poids total de la composition de revêtement.

4. Composition de revêtement de fil selon les revendications 1 à 3, dans laquelle le réseau élément-oxygène des particules réactives A) comprend les éléments titane, silicium, aluminium, bore et/ou zirconium.

5. Composition de revêtement de fil selon les revendications 1 à 4, dans laquelle la fonction réactive R₁ est contenue en une quantité de 0,2 à 60 % en poids, par rapport au poids total des particules réactives.

6. Composition de revêtement de fil selon les revendications 1 à 5, dans laquelle les fonctions R₁ sont des radicaux de di-, tri- et/ou polyisocyanates et/ou des radicaux de di-, tri- et/ou polyisothiocyanates, et dans laquelle les fonctions R₁ sont présentes en une quantité de 0,2 à 60 % en poids par rapport au poids total des particules réactives.

7. Composition de revêtement de fil selon les revendications 1 à 6, dans laquelle les fonctions réactives R₁ sont des radicaux d'uréthane à fonctionnalité isocyanate, 4-(4'-isocyanatophénylméthyl)phényluréthane, oligo- ou polyimide à fonctionnalité isocyanato bloqué ou non bloqué, oligo- ou polyamide imide à fonctionnalité isocyanato bloqué ou non bloqué, oligo- ou polyamide imide à fonctionnalité amidino et/ou oligo- ou polyamide imide à fonctionnalité carboxy, ou des mélanges de ceux-ci, liés chimiquement sur la surface du réseau élément-oxygène par le biais d'un ou plusieurs groupes carbamate et/ou thiocarbamate.

8. Procédé de revêtement de fils électriquement conducteurs consistant à appliquer la composition de revêtement selon les revendications 1 à 7 et à durcir la composition de revêtement.

9. Procédé selon la revendication 8, dans lequel les fils électriquement conducteurs sont pré-enduits.

10. Procédé selon les revendications 8 et 9, dans lequel la composition de revêtement est utilisée sous forme d'application monocouche.

11. Fil électriquement conducteur enduit de la composition selon les revendications 1 à 7.
